**Europäisches Patentamt**

**European Patent Office**

**Office européen des brevets**

(19)

(11) Publication number: **0 027 656**
**A1**

(12) # EUROPEAN PATENT APPLICATION

(21) Application number: **80106364.5**

(22) Date of filing: **20.10.80**

(51) Int. Cl.³: **G 01 B 7/16**

(30) Priority: **23.10.79 IT 2672379**

(43) Date of publication of application:
**29.04.81 Bulletin 81/17**

(84) Designated Contracting States:
**CH DE FR GB LI**

(71) Applicant: **PONTEGGI EST S.p.A.**
**Corso di Porta Nuova, 3**
**I-20100 Milan(IT)**

(72) Inventor: **Prevedini, Cesare**
**Via Mascheroni, 20**
**I-20100 Milan(IT)**

(74) Representative: **Racheli, Adele**
**ING. A. RACHELI & C. Viale San Michele del Carso 4**
**I-20144 Milano(IT)**

(54) **An automatic device for sensing and transducing elongation measurements in cables or strands under traction.**

(57) Device for automatically sensing and remote transmitting the displacements in strands or strand assembly (T) making up a cable for the compression of reinforced concrete or for supporting anchoring or consolidating earth, comprising a sensor (7) cooperating with an actuating means (5) provided by rotation of a line about an axis (A-A) coincident with the axis of said strand (T), such a sensor (7) supplying the signals to a detecting means. The possible connection of the device with a survey for traction strains applied to the strands, as well as with monitors, printing machines, computers, data processors, alarms, and the like is also foreseen.

EP 0 027 656 A1

./...

FIG.1

Applicants:

PONTEGGI EST S.p.A.

Corso di Porta Nuova, 3

20100 MILAN (Italy)

AN AUTOMATIC DEVICE FOR SENSING AND TRANSDUCING ELONGATION

MEASUREMENTS IN CABLES OR STRANDS UNDER TRACTION.

This invention relates to an automatic device for sensing and
possibly transducing the elongations undergone by cables or
strands under traction, which provide the pre- or post-compression
of reinforced concrete, or anchorage of structures or consolidation
of grounds, so as to obtain an easy reading and/or printing and/
or processing of said measurements at the control station of the
tensioning operations.

As well known, the compression action in pre-compressed or
post-tensioned reinforced concrete is effected by tensioning of
cables, comprising strands or steel ropes of very high strength and other fittings, suitably attached to one end of the cable or placed, either before or after the concrete casting, in suitable calculated locations within the concrete structure.

In ground anchorage and consolidation, tensioning operation is carried out by suitably blocking one end of the cable at the innermost end of the bore drilled in the ground for cable insertion therein.

Cable tensioning is accomplished by suitable oleodynamic jacks, subjecting to traction the projecting end of the individual strands or strand assembly making up the cable.

The traction strain indirectly measured by the fluid pressure in the jack causes an increase in the length of the strand or strand assembly emerging from the end reaction plate having the jacks bearing thereon.

It is essential to measure said displacements of the strand or strand assembly end under traction for correlating them with the applied force. The amount of these displacements depend on several factors. In addition to the characteristics of steel subjected to resilient elongation, there should also be taken into account, for example, the configuration of the strand or cable and its location, the inner friction of the cable and its friction with the sheath wall and, finally, the permanent deformation of the concrete subjected to compression.

The correspondence between increments of traction strain and increments of displacements of the strands or strand assembly is determinant for establishing when tensioning has to be terminated in connection with planning calculations and on the ground of further complementary factors.

Displacement measurement is up to now essentially effected by sight methods, that is by graduated rods applied to the jacks, or by articulated or flexible rules. The sight reading and transcription thereof, which is as inconvenient and doubtful as higher is the number of jacks, would succeed in estimating the measurement with the accuracy of only one millimeter, when carried out with extreme care, which accuracy can be deemed as rough, particularly when towards the end of tensioning, small increases in displacement would correspond to substantial increases in applied force.

The data so transcribed do not allow on site, that is on the building yard, but difficult processings of correlation with the applied force and comparison with planning calculations.

Therefore, it is the object of the present invention to provide for an automatic sensing of the displacements in strands or strand assembly with a very high accuracy.

It is a further object of the invention to provide the remote transmission of said measurements, at a suitable location, such as for example the pumping station or at the supervision

/ l

- 4 -

of construction, supplying to a reading apparatus actual mechanical values.

An improvement of the invention provides the possibility of simultaneously sensing and transmitting also the traction strain and reading said measure in actual mechanical value.

Still a further improvement of the invention provides that all of the data can be supplied to the inlet of a printing device.

Finally, the possible detection of time is also contemplated during the tensioning operations.

All of the sensed data may be also directly or indirectly introduced into a computer or data processor suitable for the calculation methodology intended to be adopted and for the results to be obtained.

The system comprises a displacement sensor placed on each fixed portion of a jack, which sensor cooperates with an actuating means provided by rotation of a line about an axis coincident with the strand axis, which actuating means is integral with the strand, so that said sensor translates the relative linear displacements of the movable part of the jack integral with the strand with respect to the fixed portion thereof, fixed relative to the reaction plate, into a form that can be read or telecast.

A small cable branches off from each of the sensors and arrives

, '

at the signal interpretation location. Various transmission forms may be provided depending on the type of sensor: electric voltage or current in analog or pulse form, or also a mechanical rotational transmission.

5. The interpretation and reading member differs in accordance with the transmission form: if the transmission is mechanical by a small flexible steel cable rotating by suitably multiplied rotation, a revolution indicator or counter for each of the strands could directly supply in metrical values the reading of the linear displacement; should the transmission form be analog, only one gauge instrument for the transmitted signal is needed for sequantially scanning all of the sensors with the aid of an automatic or manual change-over switch.

At any moment of tensioning, the zero setting of the displacements is also possible, whatever is the pressure value at that location.

If a calculation processor is added, the measurements can be introduced by a specific interface into the computer which, for example, may supply the reading of the pressure, displacement and time measures on a monitor and/or a printing device. The computer may be programmed for supplying, for example, the values of the displacements for predetermined pressure increments and their average. When provided with a clock, it may also provide the time at which every pressure increment was applied; it may calculate the maximum or minimum value of a set of displacements and the average quadratic change thereof; it may signal if these values are outside of predetermined limit values; it may represent on the monitor and/or printing device the diagrams of pressure versus displacements and pressure versus time and also process further calculations deemed as necessary or useful, so as to enable conscious decisions on the site at the building yard, and supply immediate indications as to the incidence of the several factors on the compression phenomenon to allow to check the correspondence between actual event and planning calculations.

The invention will now be more clearly explained with reference to some exemplary embodiments as shown in the accompanying drawings, in which:
Fig. 1 is a sectional view showing the end of the strand which is put under traction;
Fig. 2 is a view showing a first embodiment of the invention;
Fig. 3 is a view showing a second embodiment of the invention;
Fig. 4 is a sectional view taken along line 4-4 of Fig. 3; and
Figs. 5 and 6 are diagrams that can be obtained by the apparatus according to the present invention.

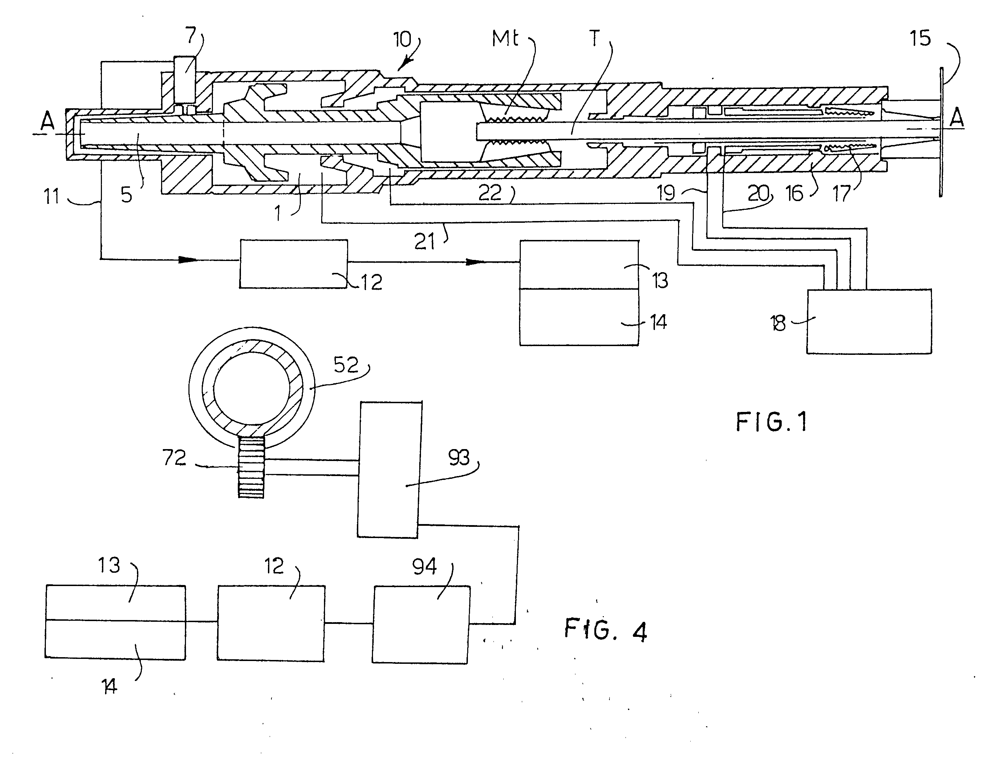

A strand T is shown in Fig. 1 as subjected to the action of a jack 10 provided with the sensing and transducing device for the strand displacements. Said jack bears against a supporting or bearing plate 15. It is formed of the following parts: a head "TAC" 16 comprising a connector or terminal 17 controlled by the hydraulic station 18 through the conduits 19 and 20. The pull force produced by the jack is provided by the hydraulic station 18 through the conduits 21 and 22. The actuating means 5 is integral with the movable part of jack 10 and cooperates with the sensor 7. Said movable part of the jack is made integral with the strand by the clip Mt. In this case, said actuating means 5 is cone-shaped. The jack is subjected to traction by introducing oil under controlled and measured pressure into the chamber 1. By means of line 11 said sensor 7 is connected to a reader or monitor 12 controlling a plotter 13 with associated processor 14.

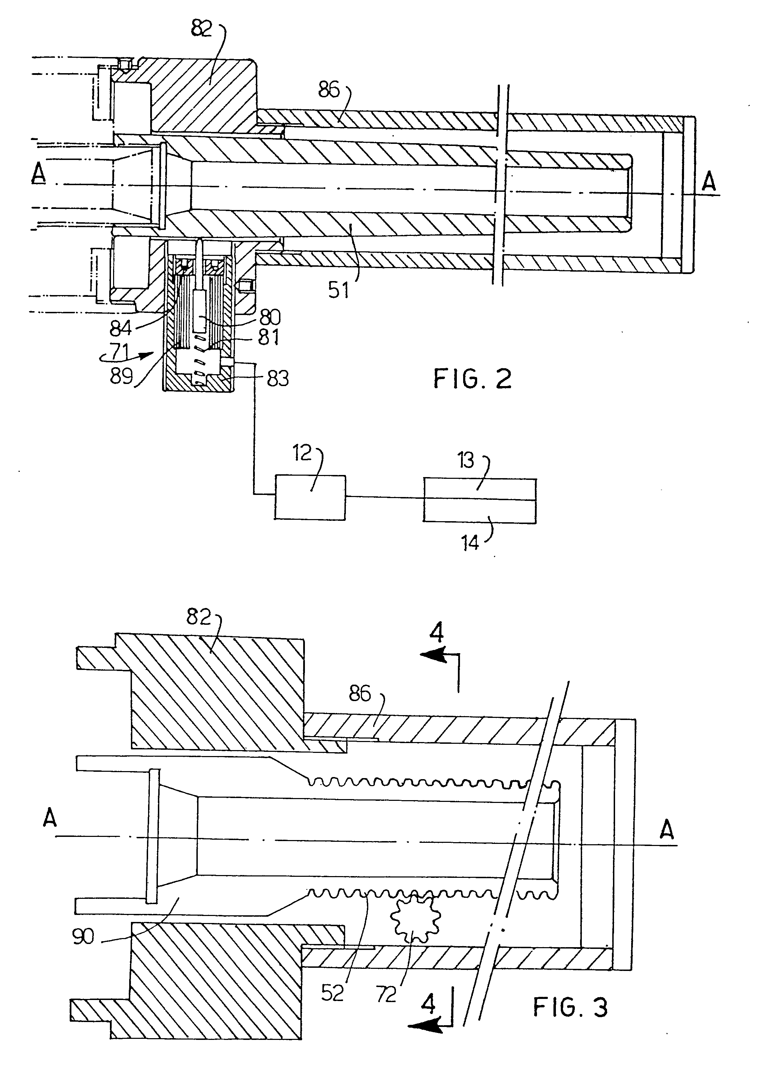

In the embodiment shown in Fig. 2, the actuating means cooperating with the sensor has been designated by 51. It is internally bored for the passage of the end portion of the strand and is externally conical or tapered with, for example, an inclination of 2.5%. In this case, the sensor is formed of a unit 71 comprising a magnetic core 80, which is pressed against the conical actuating means 51 by a spring 81; it moves in a direction perpendicular to the axis A-A of the jack and strand, exactly proportionally to the stroke of the movable part of the jack and strand, even if the latter are rotably driven, causing a change in electrical amount or magnitude in winding 89. The measure of this change or variation is an univocal function of the strand displacement and can be readily transmitted, suitable for analog or digital reading in reader 12, then can be introduced into a plotter 13 and/or a processor 14 for successive calculations. The sensor is further completed by a casing 83 and a cover or lid 84. The sensor is mounted within a flange 82 forming part of the jack. This flange has a protective tube 86 threaded thereon.

/ 1

- 8 -

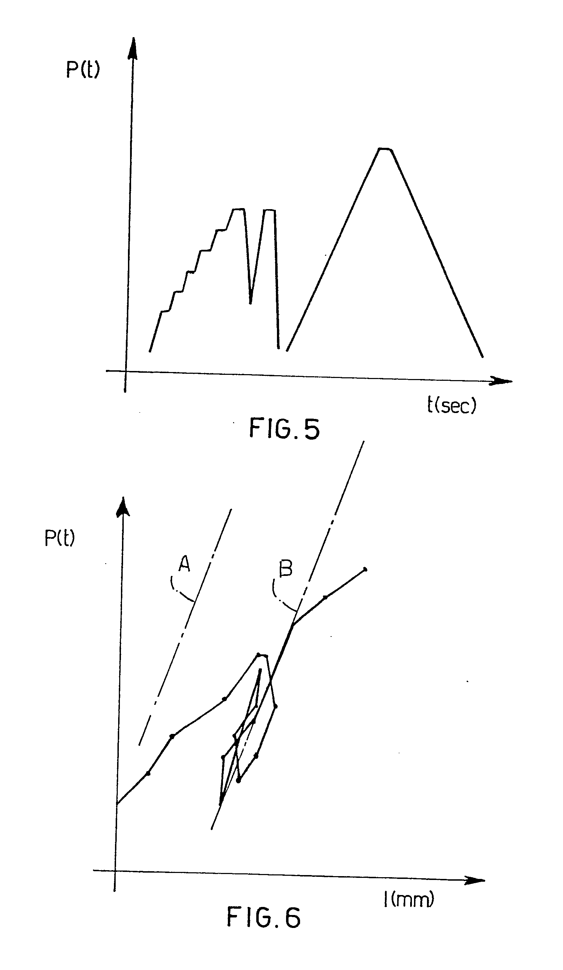

In the embodiment according to Figs. 3 and 4, the actuating means comprise a circular rack 52 secured on a hollow cylinder 90, in which said strand T is slidable. This circular rack 52 is obtained by rotation of a toothed profile about the axis A-A of the strand. It engages a pinion 72 integral with the pulse generator 93 (Fig. 4), connected with the relative pulse counter 94, which supplies its signals to a reader or monitor 12, then to a plotter 13 and a processor 14. At each value of the reading, there will correspond only but one displacement of the movable part of the jack and strand.

The circular rack 52 is the means allowing the displacement sensing also in the presence of rotations of the strand, piston and piece 90. It is formed of a set of teeth extending throughout its circumference.

At the same time and still by a measure transducing device, the pressure applied to the piston is measured, this enabling the calculation of the traction strain or stress transmitted to the strand.

The apparatus may be provided with a time indicating clock marking from the start the time at which the tensioning operations are carried out.

Therefore, by connecting said detections to a processor fitted with a printing device, not forgeable papers can be obtained, that is for instance the two basic diagrams of the tensioning operation, of which two typical examples are shown in Figs. 5 and 6. In Fig. 5 the time t in seconds is shown on the abscissas and the total load P in tons is shown on the ordinates. In Fig. 6, the elongations in millimeters are shown on the abscissas, while the load P in tons is shown on the ordinates. From this latter diagram, the theoretical free length is obtained as shown by the straight line A and the actual free length shown by the straight line B. At determined intervals or periods, or as required, the processor supplies the result of predetermined calculations, such as for example the free length of the anchorage or other data as decided by the designer; the processor ascertains whether the results of the tensioning operation correspond or not to the planning data.

Applicants:
PONTEGGI EST S.p.A.
20100 - MILAN (Italy)

C L A I M S

1.    A device for automatically sensing and transmitting the displacements of strands or strand assembly making up a cable for the compression of reinforced concrete, for supporting, anchoring or consolidating earth, caracterized by comprising a sensor (7, 71, 72) cooperating with an actuating means (5, 51, 52) provided by rotation of a line about an axis coincident with the axis (A-A) of the strand, said sensor supplying its signals to a detecting means.

2.    An apparatus according to Claim 1, characterized in that the actuating means (51) is provided by rotation of a substantially straight line.

3.    An apparatus according to Claim 1, characterized in that the actuating means (52) is provided by rotation of a line having a toothed profile.

4.    An apparatus according to Claim 1, 2 or 3, characterized in that together with the displacement sensed by the sensor

- 11 -

(7, 71, 72) also the operating pressure for the jack (10)
is sensed.

5.  An apparatus according to any of the preceding claims,
characterized in that together with the elongations also the
time is measured.

6.  An apparatus according to any of the preceding claims,
characterized in that the obtained measures are supplied to
an electronic processor (14) so as to enable the processing of
calculations in real time.

7.  An apparatus according to Claim 6, characterized in that
the processor (14) enables the monitoring and/or printing of
diagrams for correlating the measured values to one another and
to the time.

FIG. 1

FIG. 4

0027656

FIG. 2

FIG. 3

P(t)

t(sec)

FIG.5

P(t)

A

B

l(mm)

FIG.6

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | G 01 B 7/16 |
| | FR - A - 2 216 033 (SCHLOEMANN-SIEMAG A.G.) <br><br> * Page 1, lines 21-27; page 2, lines 11-31; figure * <br><br> -- | 1,6 | |
| | ARCHIV FUR TECHNISCHES MESSEN, Blatt V 171-16, April 1969, pages 73-74 München, DE. HELMUT KAULFERSCH: "Schwingungs- und Dehnungsmessungen an grossen Aggregaten, insbesondere an Dampfturbinen" <br><br> * Page 73, column 1, paragraph 3; page 73, column 2, paragraph 1; page 74, column 1, paragraph 3; figures 2,3,7 * <br><br> -- | 1,4 | **TECHNICAL FIELDS SEARCHED (Int.Cl. ³)** <br><br> G 01 B 7/16 <br> 5/30 <br> 7/24 <br> 21/32 <br> G 01 N 3/06 |
| | US - A - 2 427 866 (W.D. MACGEORGE) <br><br> * Claim 1; column 4, lines 18-46; figures 3,4 * <br><br> -- | 1 | |
| | US - A - 2 901 833 (SIDNEY P. JOHNSON) <br><br> * Claims 1,2; column 2, lines 16-37; figures 1-3 * <br><br> -- | 1,3 | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | US - A - 2 484 164 (CLAUDE M. HATHAWAY) <br><br> * Claim 1; column 3, lines 50-65; column 4, lines 10-37; figures 1-5 * <br><br> -- ./. | 1 | |
| | | | & member of the same patent family, corresponding document |

The present search report has been drawn up for all claims

| Place of search | Date of completion of the search | Examiner |
|---|---|---|
| The Hague | 29-01-1981 | MIOT |

European Patent
Office

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | DE - C - 815 557 (CUNO SCHUCKHAUS)<br>* Claim 1; figure *<br>--<br>PROCEEDINGS OF THE IEEE, vol. 63, no. 10, October 1975, pages 1445-1450<br>New York, U.S.A.<br>G.H. WILSON et al.: "Real-time data acquisition and reduction of critical dynamic fatigue parameters"<br>* Page 1447, column 1, paragraphs 3,4; page 1448, column 1, paragraph 1; figures 6,7 *<br>---- | 3<br><br>6,7 | |
| | | | TECHNICAL FIELDS SEARCHED (Int. Cl. 3) |